# EUROPEAN PATENT APPLICATION

(11) **EP 4 571 450 A1**
(43) Date of publication of application: **18.06.2025**
(21) Application number: 23215430.2
(22) Date of filing: 11.12.2023
(51) Int. Cl.: G05D 23/19, F24D 19/10, F24F 11/00

(54) **METHOD FOR CONTROLLING AN ELECTRONIC ACTUATOR FOR A RADIATOR VALVE AND ELECTRONIC ACTUATOR FOR A RADIATOR VALVE**

(71) Applicant: Danfoss A/S, 6430 Nordborg (DK)
(72) Inventor: MUNCH, Lars, Nordborg (DK); GAMMELJORD, Peter, Nordborg (DK)
(74) Representative: Patentanwälte Olbricht Buchhold Keulertz

(57) **Abstract**

The present invention is directed at a method for controlling an electronic actuator for a radiator valve, the actuator being controlled by a controller using a control interval, the method comprising the steps of
- measuring an actual set point temperature
- measuring an actual temperature;
- calculating a temperature difference between the actual temperature and the set point temperature; and
- controlling the electronic actuator at the control interval, wherein the control interval is depending on the calculated temperature difference.

The invention is also directed at an electronic actuator for a radiator valve performing the method.

## Description

The present invention pertains to a method for controlling an electronic actuator for a radiator valve, the actuator being controlled by a controller using a control interval, the method comprising the steps of
- setting an actual set point temperature;
- measuring an actual temperature;
- calculating a temperature difference between the actual temperature and the set point temperature; and
- controlling the electronic actuator at the control interval, wherein the control interval is depending on the calculated temperature difference.

The invention is also directed at an electronic actuator for a radiator valve performing the method.

Known methods for controlling electronic actuators for radiator valves typically use constant control intervals of e.g. one minute. This means that the controlling of the actuator is not performed constantly but rather at the same time intervals regardless of the circumstances. The controlling of the actuator may comprise any steps such as temperature measurements, calculation steps and controlling the electronic actuator for adjusting the radiator valve position.

A problem arising from the known methods is that energy consuming controlling movement of the actuator takes place even when the circumstances would not necessitate any controlling activities. These unnecessary controlling activities result in unnecessary energy consumption during the control activities. This in turn may lead to reduced battery life and corresponding frequent replacements or charging requirements of the batteries.

The aim of the present invention is to provide an improved method for controlling electronic actuators for radiator valves, which overcomes this problem and reduces the energy consumption.

This aim is achieved by a method according to claim 1 and an electronic actuator for a radiator valve according to claim 10. Preferable embodiments are subject to the sub-claims.

According to claim 1, a method for controlling an electronic actuator for a radiator valve is provided. The actuator is controlled by a controller using a control interval and the method comprises the steps of
- setting an actual set point temperature;
- measuring an actual temperature;
- calculating a temperature difference between the actual temperature and the set point temperature; and
- controlling the electronic actuator at the control interval, wherein the control interval is depending on the calculated temperature difference.

The actual temperature may be the temperature measured at the controller, for example the actual room temperature at the position of the radiator. The actual set point temperature may be set by an operator operating the controller and may be determined from the operator input provided to the controller. The actual set point temperature may have been set well in advance of the other method steps. The set point may be dynamic, i.e. it may be changed by the controller at some point during the execution of the method.

The control interval, at which the electronic actuator is controlled or operated, may be longer, if for example the calculated temperature difference indicates that adjustment of the radiator valve will not be needed for some time. In this case, the number of control operations is reduced by increasing the control interval, and less energy is thus spent on the control operations.

The present invention may thus provide a predictive wake-up algorithm, which activates the controller for performing controlling operations at a low but sufficient frequency, saving energy and obtaining longer battery lifetime of the controller battery. The controller may be set at an energy saving mode between subsequent controlling operations.

In a preferred embodiment of the invention, the method for controlling the electronic actuator for a radiator valve further comprises the step of
- controlling the electronic actuator at a present control interval as a function of the temperature difference, wherein the present control interval is a standard control interval or an increased control interval longer than the standard control interval.

If the calculated temperature difference indicates that fewer control operations are sufficient for providing adequate controlling of the electronic actuator, the standard control interval may not be used for controlling the electronic actuator, as this would result in unnecessarily increased energy consumption. Instead, increased control intervals may be used.

In a particularly preferred embodiment of the invention, the present control interval is the standard control interval if the temperature difference is below a difference threshold and the present control interval is the increased control interval if the temperatures difference is above the difference threshold.

A high temperature difference may indicate that it will take the radiator controlled via the radiator valve a longer period of time, to reach a certain actual set point temperature, compared to a low temperature difference. This may mean that frequent control operations are currently not required and the controlling may occur at longer control intervals. For example, if the controller determines that the measured temperature does not change significantly after a certain number of control operations have been executed at the standard interval, then the present control interval may be set to the increased control interval.

The difference threshold may be set by an operator or may be evaluated automatically as a further method step.

In another preferred embodiment of the invention, the method for controlling the electronic actuator for a radiator valve further comprises the steps of
- storing the actual temperature; and/or
- storing the actual set point temperature.

The stored temperatures may be used for further refining the method, whereby past temperature values may provide information on the setting of the radiator valve.

In a particularly preferred embodiment of the invention, the measuring and storing of the actual temperature and/or the calculating of the temperature difference are performed at the same interval as the controlling of the electronic actuator or at a shorter interval.

As the actual mechanical method step of controlling of the electronic actuator for adjusting the radiator valve position may typically require more energy than the purely computational method steps, the mechanical method steps may be performed less frequently than the purely computational method steps.

In another preferred embodiment of the invention, the method comprises the steps of
- storing time data associated with every actual temperature stored;
- calculating an actual temperature gradient from the actual temperature and previously stored actual temperatures; and
- controlling the electronic actuator as a function of the temperature difference and the actual temperature gradient.

Taking into account the temperature gradient makes it possible to react to e.g. the thermal inertia of the system heated by the radiator. Ther term system may apply to any combination of components relevant to the functioning of the radiator valve controlled by the presently described method. For example, if the temperature gradient is determined to be small, i.e. below a certain temperature gradient threshold, then the control interval can be increased, further increasing the energy efficiency of the present invention.

In another preferred embodiment of the invention, the method comprises controlling the electronic actuator every time the actual set point temperature has been set.

As a changed set point may suddenly require a change of the radiator valve setting, the change of the set point should result in a control loop being executed. In order to perform the control loop, the actual temperature and the actual set point temperature can be measured or set, and the actuator can be controlled based on these temperature values. User interaction with the controller such as setting a new actual set point temperature may therefore overrule the current control interval.

In another preferred embodiment of the invention, the method comprises the step of
- performing communication at a communication interval, wherein the communication interval is a function of the control interval.

The communication may be performed between the controller and some other electronic device, such as an additional sensor, e.g. a return sensor or return temperature sensor (RTS). Rendering the communication interval a function of the control interval makes it possible to introduce further energy savings. The communication may take place over long or short ranges and/or may be a form of wireless communication.

In another preferred embodiment of the invention, the method comprises the step of
- performing return sensor communication at a return sensor communication interval, wherein the return sensor communication interval is a function of the control interval and preferably of the actual set point temperature.

The return sensor may be provided for measuring the temperature of the heat transfer medium returning from the radiator to a heating device. The measured temperature of the heat transfer medium may provide additional information on the system heated by the radiator and said information may be used for further optimizing the method.

The return sensor or return temperature sensor is a sensor which can measure the temperature of the media flowing back from the radiator to a boiler/heating system. The sensor may be placed at some middle portion of the radiator rather than an outlet port of the radiator. Thus, the sensor is not necessarily a return temperature sensor, but it may be a radiator temperature sensor. The media temperature given by the return temperatures sensor may be temperature gradient compensated, and/or it may be extrapolated if the sensor is not located directly on the outlet port of the radiator.

The invention is also directed at an electronic actuator for a radiator valve performing the presently described method. The electronic actuator may comprise any of the hardware and/or software required for executing the presently described method steps.

Further details and advantages of the invention are described with reference to the figures, whereby the described features may form part of the invention in any suitable way. The figures describe:
- Fig. 1:: schematic drawing of a system comprising a radiator, radiator valve and a controller for executing the presently described method;
- Fig. 2:: graphs indicating actual temperature, actual set point temperature and control interval in first conditions;
- Fig. 3:: graphs indicating actual temperature, actual set point temperature and control interval in second conditions;
- Fig. 4:: graphs indicating control intervals and communication intervals;
- Fig. 5a:: graphs indicating control intervals, RTS communication intervals, actual temperature and actual set point temperature at over temperature conditions; and
- Fig. 5b: graphs indicating control intervals, RTS communication intervals, actual temperature and actual set point temperature at increased set point temperature.

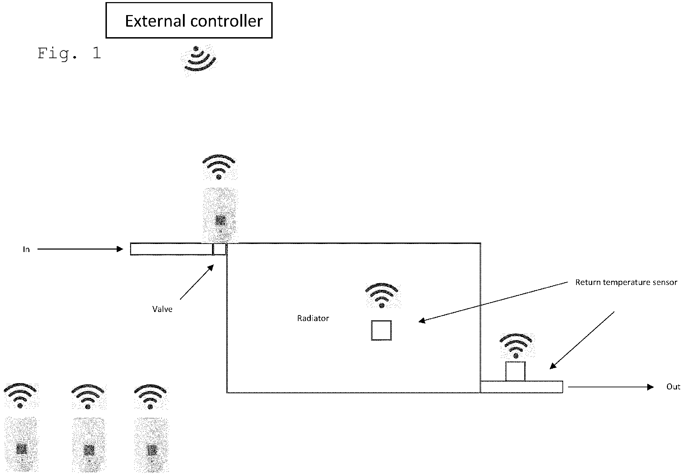

Figure 1 shows a schematic drawing of a system comprising a radiator, radiator valve, a thermostat for controlling the valve and a controller for executing the presently described method. One radiator valve is provided at an inlet port of the radiator.

Temperatures sensors such as return temperature sensors (RTS) may be provided at an outlet port and/or at a portion of the radiator. Additional or alternative sensors for measuring the room temperature may also be provided as part of the system.

Further thermostats may be provided at other radiators not shown in the figure. In the embodiment of figure 1, an external controller is provided for communicating with the thermostats and/or the RTS. The communication between the components may be provided by some kind of wireless communication means.

The thermostat may comprise a valve controller, a memory portion, at least one temperature sensor for measuring the temperature of the heat transfer fluid at the inlet port of the radiator and/or the room temperature, an electric motor such as a stepper motor for controlling the valve opening, communication means such as a radio module and/or means for setting and/or adjusting the set point temperature.

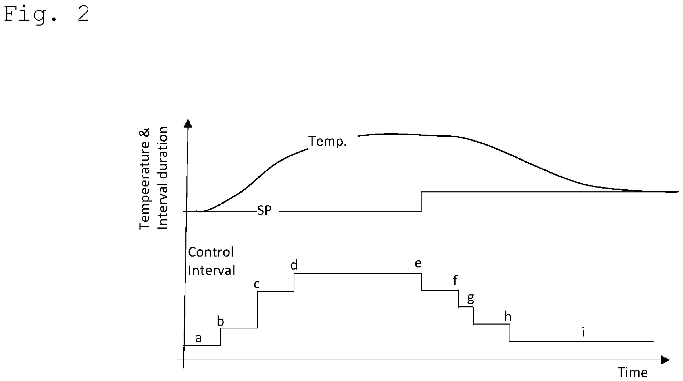

Figure 2 shows graphs indicating actual temperature (Temp.), actual set point temperature (SP) and control intervals (a to i) in first conditions, in which the actual temperature is at an over-temperature range. The first conditions shown here represent a system, in which the actual temperature is above the desired actual set point temperature. These conditions correspond to an over-temperature situation, which may typically appear during the summer or sporadically during part-load conditions.

The radiator controlled by the radiator valve is not required to transfer additional heat energy into the system under such conditions and not expected to do so in the foreseeable future. The control interval may therefore be extended from the initial value at a to subsequent longer values corresponding to points b, c, d.

Once the difference between the actual temperature and the actual set point temperature decreases, the control interval may be decreased to values corresponding to points e, f, g, h and i, whereby the control intervals at a and i may be identical. A decreased difference between the actual temperature and the actual set point temperature may result from an increased actual set point temperature and/or from a reduction of the actual temperature. This occurs at e.g. points e to i in figure 2.

The controller may be a standalone controller or part of an electronic thermostatic radiator valve (eTRV). The standard control interval for the controller may be set at one controlling operation of the actuator every minute. The method may comprise waking up the controller, measuring or sampling the temperatures, calculating the temperature difference and/or performing the temperature control or rather the controlling of the electronic actuator, i.e. adjusting the radiator valve setting.

The control procedure shown in figure 2 may correspond to the presently described method with the following exemplary steps and features. The various changes of the control interval may correspond to the claimed feature of the control interval depending on the calculated temperature difference.
a) As a control interval, a standard 1-minute control interval at point a may be applied at the beginning of the control procedure.
b) The actual temperature is a certain level over the actual set point temperature and is increasing at a certain rate. As a result, the control interval is increased.
c) The actual temperature is at a certain level over the actual set point temperature and is increasing at a certain rate. The control interval is increased further.
d) The actual temperature is at a certain level over the actual set point temperature and is increasing at a certain rate. The control interval is increased further.
e) The actual set point temperature is increased narrowing the difference between the actual temperature and the actual set point temperature. The control interval is decreased accordingly.
f) The actual temperature is still well over the actual set point temperature and is now decreasing at a certain rate. The control interval is decreased further.
g) The actual temperature is still well over the actual set point temperature but is decreasing more rapidly. The control interval is decreased even further.
h) The actual temperature is now close to the actual set point temperature and decreasing. The control interval is reset to the standard interval.
i) At point i, the standard 1-minute control interval is used according to the method.

Figure 2 thus clarifies the step of controlling the electronic actuator at a present control interval as a function of the calculated temperature difference, wherein the present control interval is a standard control interval or an increased control interval longer than the standard control interval. For determining a suitable control interval, suitable temperature difference thresholds can be provided to the controller or automatically established by the controller during its operation.

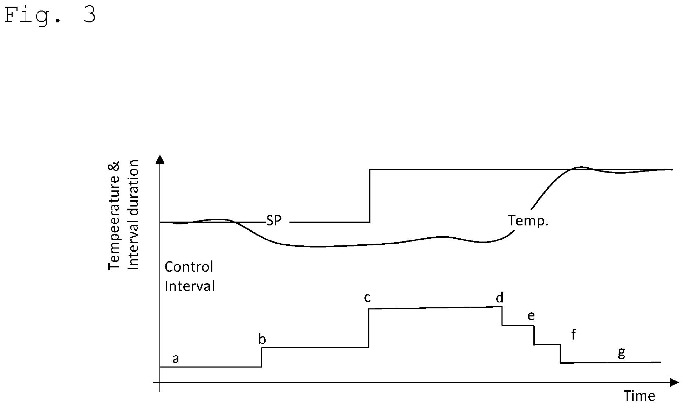

Figure 3 shows graphs indicating actual temperature (Temp.), actual set point temperature (SP) and control intervals in second conditions, in which the actual temperature is at an under-temperature range.

The second conditions shown in figure 3 may represent a system, in which the actual temperature stays below the desired actual set point temperature for a considerable amount of time. The under-temperature situation of figure 3 may appear if the radiator is under-dimensioned or if the flow/supply temperature of the heat transfer medium to the radiator is not sufficient. The thermostat or radiator valve may be fully open and there is no need to wake-up or perform controlling operations every minute while the situation is not changing significantly.

The control interval may therefore be extended from the initial value at a to subsequent longer values corresponding to points b, c.

Once the difference between the actual temperature and the actual set point temperature decreases, the control interval may be decreased to shorter values corresponding to points d, e, f, and g. A decreased difference between the actual temperature and the actual set point temperature may result from a changed actual set point temperature and/or from an increase of the actual temperature. An increase of the actual temperature occurs at e.g. points d to f in figure 3.

The control procedure shown in figure 3 may also correspond to the presently described method with the following exemplary steps and features. The various changes of the control interval may correspond to the claimed feature of the control interval depending on the calculated temperature difference.
a) As a control interval, a standard 1-minute control interval at point a may be applied at the beginning of the control procedure.
b) The actual temperature is a certain level below the actual set point temperature and is decreasing at a certain rate. As a result, the control interval is increased.
c) The actual set point temperature is increased making an even larger difference between the actual set point temperature and the actual temperature. As a result, the control interval is increased further.
d) The actual temperature is beginning to increase. Order to increase the responsiveness of the method, the control interval is further decreased.
e) The actual temperature is still well below actual set point temperature but is increasing at a certain rate. As a result, the control interval is decreased.
f) The actual temperature is now close to actual set point temperature and increasing. As a result, the control interval is reset to the standard interval.
g) At point g, the standard 1-minute control interval is used according to the method.

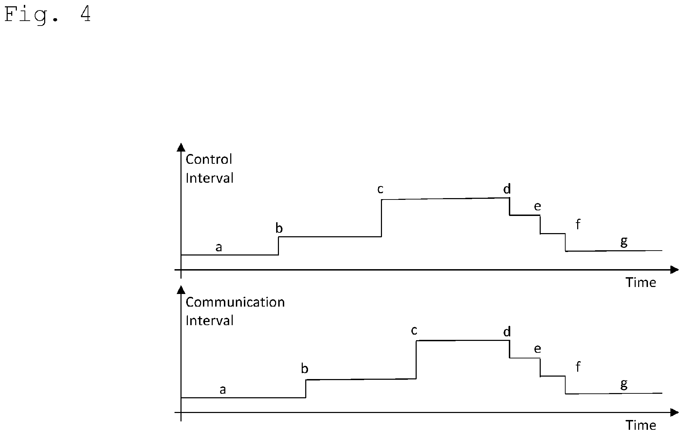

Figure 4 shows graphs indicating control intervals and communication intervals. Communication may take place with a long interval e.g., once every hour. Long-range communication may take place between the controller and other electronic devices. The graphs indicate that the communication interval may depend on the control interval for controlling the electronic actuator.

If the control interval for controlling the electronic actuator differs from the standard e.g. 1-minute control interval, it means that the controller is currently performs control operations at longer control intervals. When the controller performs control operations at longer control intervals, the communication can be slowed down, too by increasing the communication intervals. The method may use the present and former control intervals for determining suitable communication intervals. The present and former control intervals may have to be stored accordingly.

The control procedure shown in figure 4 may be a part of the presently described method with the following exemplary steps and features. The various changes of the intervals may correspond to the step of performing communication at a communication interval, wherein the communication interval is a function of the control interval.
a) As a communication interval, a standard 1-hour communication interval at point a may be applied at the beginning of the control procedure.
b) Since the last communication occurred, the control interval has been increased during the time-period of the communication interval. The communication interval is increased accordingly. If the control interval had been lowered or maintained at the standard control interval since the last communication, then the control interval is not at a stable level. The communication interval is increased only if the control interval is stable and above the standard control interval.
c) Since the last communication occurred, the control interval has been increased during the entire time-period. The communication interval is increased accordingly.
d) Since the last communication occurred, the control interval has been decreased. The communication interval is decreased accordingly.
e) Since the last communication occurred, the control interval has been decreased. The communication interval is decreased accordingly.
f) Since the last communication occurred, the control interval has been decreased. The communication interval is decreased accordingly.
g) At point g, the standard 1-hour communication interval is used according to the method.

The presently mentioned durations of the standard intervals are only examples and may deviate from the mentioned values.

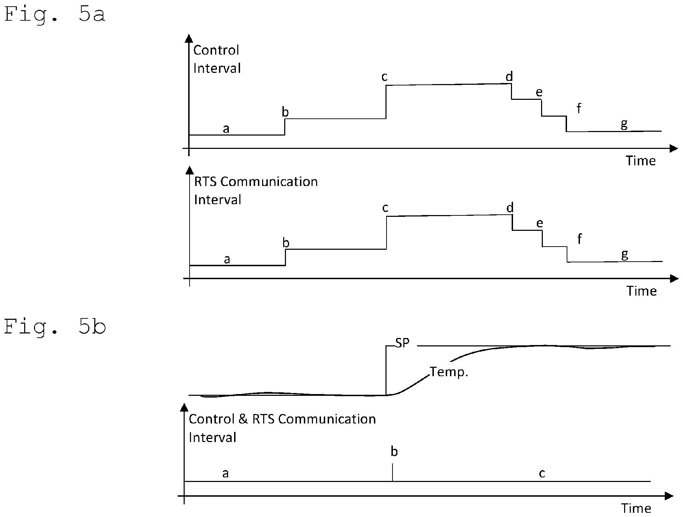

Figure 5a shows graphs indicating control intervals, RTS communication intervals, actual temperature and actual set point temperature at over temperature conditions. The two graphs of figure 5a show how RTS communication interval can be increased when control interval is increased during over temperature conditions.

Figure 5b shows graphs indicating control intervals, RTS communication intervals, actual temperature and actual set point temperature at increased set point temperature. In this case, however, increasing the RTS communication interval may not be possible, as the valve or the eTRV needs to be opened to increase the heating to raise the measured temperature to the new setpoint temperature. The controller needs to measure if the return temperature raises too much and it thus has to close the valve a bit again.

Thus, the presently described method may be used in conjunction with a return sensor for measuring the temperature of a heat transfer medium returning from the radiator to a heating device. The control interval and the return-sensor communication between the RTS and the controller may be synchronized. This means that the RTS communication interval may follow or be set equal to the control interval. In case of an actual set point temperature increase, which should otherwise lead to a temporary increase in the control interval, the control interval increase may be overruled.

The control procedure shown in figure 5a may be a part of the presently described method. The various changes of the intervals may correspond to the step of performing return sensor communication at a return sensor communication interval, wherein the return sensor communication interval is a function of the control interval and preferably of the actual set point temperature.

The control procedure shown in figure 5a may be a part of the presently described method with the following exemplary steps and features:
a) As a control interval, a standard 1-minute control interval at point a may be applied at the beginning of the control procedure.
b) The actual set point temperature is increased creating an under-temperature, which based on the wake-up rules or the controlling algorithm of the electronic actuator would lead to a higher control interval. However, according to figure 5b, the control interval and the RTS communication interval are kept on the standard value since the return temperature progress must be monitored closely and the return temperature has to be kept below a certain value. The "short peak" at b indicates that normally the control interval and/or the RTS communication interval could be increased here, but as the controller needs to know if the return temperature gets to high, it needs the intervals to remain at the standard control interval.
c) At point c, the standard 1-minute control interval is used according to the method.

The presently described method may comprise the steps of
- storing the actual temperature;
- storing the actual set point temperature;
- storing time data associated with every actual temperature stored;
- calculating an actual temperature gradient from the actual temperature and previously stored actual temperatures; and/or
- controlling the electronic actuator as a function of the temperature difference and the actual temperature gradient.

The various stored data may be used for improving the controlling of the electronic actuator. For example, the temperature gradient may be used for 'gain scheduling', that is for estimating the future behavior of the system and for adjusting the controlling to this estimated future behavior. The presently described method is therefore capable of estimating the properties or the thermodynamics of the system.

Although the figures show abrupt changes in control intervals, the method can alternatively employ more gradual or dynamic changes in control interval durations.

As an additional parameter used by the method, the valve position of the radiator valve may be measured and used to support the algorithms.

According to the method, measuring and storing of the actual temperature and/or the calculating of the temperature difference may be performed at the same interval as the controlling of the electronic actuator or at a shorter interval. As the measuring, storing and calculating steps may be less energy intensive than the actual controlling of the electronic actuator, said steps may be performed more frequently.

In order to ensure swift reaction to user inputs, the controlling of the electronic actuator and the measurements and calculations for the controlling may be initiated every time the actual set point temperature has been set.

## Claims

1. Method for controlling an electronic actuator for a radiator valve, the actuator being controlled by a controller using a control interval, the method comprising the steps of
- setting an actual set point temperature;
- measuring an actual temperature;
- calculating a temperature difference between the actual temperature and the set point temperature; and
- controlling the electronic actuator at the control interval, wherein the control interval is depending on the calculated temperature difference.

2. Method according to claim 1, wherein the method for controlling the electronic actuator for a radiator valve further comprises the step of
- controlling the electronic actuator at a present control interval as a function of the temperature difference, wherein the present control interval is a standard control interval or an increased control interval longer than the standard control interval.

3. Method according to claim 2, **characterized in that** the present control interval is the standard control interval if the temperature difference is below a difference threshold and that the present control interval is the increased control interval if the temperatures difference is above the difference threshold.

4. Method according to any of the previous claims, wherein the method for controlling the electronic actuator for a radiator valve further comprises the steps of
- storing the actual temperature; and/or
- storing the actual set point temperature.

5. Method according to claim 4, **characterized in that** the measuring and storing of the actual temperature and/or the calculating of the temperature difference are performed at the same interval as the controlling of the electronic actuator or at a shorter interval.

6. Method according to claim 4 or 5, **characterized in that** the method comprises the steps of
- storing time data associated with every actual temperature stored;
- calculating an actual temperature gradient from the actual temperature and previously stored actual temperatures; and
- controlling the electronic actuator as a function of the temperature difference and the actual temperature gradient.

7. Method according to any of the previous claims, **characterized in that** the method comprises controlling the electronic actuator every time the actual set point temperature has been set.

8. Method according to any of the previous claims, **characterized in that** the method comprises the step of performing communication at a communication interval, wherein the communication interval is a function of the control interval.

9. Method according to any of the previous claims, **characterized in that** the method comprises the step of
- performing return sensor communication at a return sensor communication interval, wherein the return sensor communication interval is a function of the control interval and preferably of the actual set point temperature.

10. Electronic actuator for a radiator valve performing a method according to any of the previous claims.
